# EUROPÄISCHE PATENTSCHRIFT

(11) **EP 3 471 935 B1**
(45) Veröffentlichungstag und Bekanntmachung des Hinweises auf die Patenterteilung: **27.05.2020**
(21) Anmeldenummer: 17732086.8
(22) Anmeldetag: 20.06.2017
(51) Int. Cl.: B27N 3/02, B44C 5/04, B27N 7/00, B27N 3/18, B27D 1/00, B32B 21/14

(54) **VERFAHREN ZUR HERSTELLUNG EINER DEKORATIVEN HOLZOBERFLÄCHE**
METHOD FOR PRODUCING A DECORATIVE WOOD SURFACE
PROCÉDÉ DE PRODUCTION D'UNE SURFACE EN BOIS DÉCORATIVE

(30) Priorität: 21.06.2016 DE 102016007595
(43) Veröffentlichungstag der Anmeldung: 24.04.2019
(73) Patentinhaber: Danzer GmbH, 6340 Baar (CH); Volkswagen Aktiengesellschaft, 38440 Wolfsburg (DE)
(72) Erfinder: WENK, Thomas Josef, 01920 Panschwitz-Kuckau (DE); GUDLIN, Zsófia, H-2627 Zebegény (HU)
(74) Vertreter: Ricker, Mathias
(86) Internationale Anmeldenummer: PCT/EP2017/065054
(87) Internationale Veröffentlichungsnummer: WO 2017/220557

(56) Entgegenhaltungen:
- EP-A1- 2 527 107
- JP-B2- 2 886 827
- JP-B2- 3 259 197

## Beschreibung

Die Erfindung betrifft ein Verfahren zur Herstellung einer dekorativen Holzoberfläche sowie die Verwendung dieser Holzoberfläche.

Dekorative Holzoberflächen kommen beispielsweise in der Möbel-, Türen- sowie Paneeleindustrie ebenso wie bei der Automobil-, Boots- und Flugzeugausstattung oder im Innenausbau zum Einsatz.

Beispielsweise können Furniere, die typischerweise in Form von 0,5 mm bis 8 mm starken Blättern vorliegen, als dekorative Holzoberflächen verwendet werden.

Die einfachen Furniere werden in der Regel als Schälfurniere durch Schälen von Baumstämmen erzeugt, wobei ein bandförmiges Furnier entsteht. Es kommen auch Messerfurniere zum Einsatz, die dadurch hergestellt werden, dass vom Stamm mittels eines Messers das Furnier blattweise abgeschnitten wird.

Derartig hergestellte Furniere können den Nachteil haben, dass die Optik der hergestellten Oberflächen nur schwer reproduzierbar ist, da die Qualität und somit auch der optische Eindruck des zur Herstellung des Furniers eingesetzten Naturprodukts Holz nicht konstant ist.

Furniere mit verbesserter Reproduzierbarkeit des optischen Eindrucks der Oberfläche können beispielsweise dadurch hergestellt werden, dass Furnierblätter übereinander gelegt, verpresst und miteinander verleimt werden. Danach wird vom entstandenen Block blattweise Furnier abgemessert, welches eine dekorative Oberfläche aufweist. Ein derartiges Verfahren wird beispielsweise in EP 2 832 558 offenbart.

JP 3 259197 B2 offenbart die Herstellung eines natürlichen Holzfurnierblatts, wobei ein dünnes Furnierblatt auf ein Faserblatt mit einer Trockenzugfestigkeit von 2 kg pro 5 cm Breite oder mehr durch einen Polyurethanharzklebstoff laminiert wird, um dasselbe unter Druck mit dem Blatt zu verbinden. Das dünne Furnierblatt ist zweiteilig geschnitten und besteht aus jeweils zweiteilig eingepassten Furnierblattstücken unterschiedlicher Art. Jedes der Furnierblattstücke wird durch Laminieren und Verbinden des Furniers aus natürlichem Holz mit einem Faserblatt mit einer Trockenzugfestigkeit von 1,5 kg pro 5 cm Breite oder mehr unter Druck durch einen wärmehärtenden synthetischen Kautschuklatex vom Amino-Vernetzungstyp erhalten.

Aufgabe der vorliegenden Erfindung ist es ein Verfahren bereitzustellen, welches die Herstellung einer dekorativen Holzoberfläche in Form eines Furniers gestattet, bei dem der optische Eindruck der Oberfläche mit verbesserter Reproduzierbarkeit erzeugt werden kann.

Diese Aufgabe wird gelöst mit einem Verfahren gemäß Anspruch 1.

Alternativ dazu kann auch ein Verfahren eingesetzt werden, welches mindestens die Stufen (A) bis (E) aufweist:
(A) Vermischen von geschnittenen ebenflächigen Furnierstücken, deren Oberseite oder Unterseite jeweils eine Oberfläche im Bereich von 200 mm² bis 2000 mm² aufweist, wobei die Furnierstücke jeweils eine Dicke im Bereich von unter 1 mm, vorzugsweise 0,5 mm bis 0,6 mm, aufweisen;
(B) Beleimen der vermischten Furnierstücke;
(C) Anordnen der beleimten Furnierstücke zu einer Schicht;
(D) Verpressen der in der Schicht angeordneten beleimten Furnierstücke in eine Platte oder einen Block;
(E) Messern der Platte oder des Blocks parallel zu deren Oberseite oder Unterseite unter Bildung eines abgemesserten Furniers und nachfolgendes Abschleifen des abgemesserten Furniers solange, bis das beim Abschleifen entstandene ebenflächige Furnier eine Dicke im Bereich von unter 1 mm, vorzugsweise 0,5 mm bis 0,6 mm, aufweist.

Die in Stufe (A) eingesetzten Furnierstücke sind geschnitten und ebenflächig. Die Furnierstücke können gleich oder verschieden voneinander sein.

Der Begriff *"gleich"* wie hierin verwendet, bedeutet, dass sich die Furnierstücke vorzugsweise hinsichtlich ihrer Abmessungen, der Form, der verwendeten Holzart und/oder des in Stufe (A) verwendeten Furniertyps nicht voneinander unterscheiden. Der Begriff wird auch synonym zum Begriff *"gleichförmig zueinander"* verwendet.

Der Begriff *"verschieden"* wie hierin verwendet, bedeutet, dass sich die Furnierstücke vorzugsweise hinsichtlich ihrer Abmessungen, der Form, der verwendeten Holzart und/oder des in Stufe (A) verwendeten Furniertyps voneinander unterscheiden.

Der Begriff *"geschnitten"* wie hierin verwendet, bedeutet, dass die Furnierstücke aus größeren Furnieren herausgeschnitten werden. Geeignete Schneidwerkzeuge sind vorzugsweise Messer oder Scheren.

Der Begriff *"ebenflächig"* wie hierin verwendet bedeutet, dass die Furnierstücke flach ausgebildet sind und ihre Fläche, die von der Oberseite gebildet wird, bzw. die Fläche, die von der Unterseite gebildet wird, jeweils in einer Ebene liegt.

Die in Stufe (A) eingesetzten geschnittenen und ebenflächigen Furnierstücke werden aus einem Schälfurnier oder einem Messerfurnier oder aus einem Schälfurnier und einem Messerfurnier hergestellt.

Die in Stufe (A) eingesetzten ebenflächigen Furnierstücke sind runde, rechteckige, rautenförmige oder parallelogrammförmige Furnierstücke. Weitere verwendbare Formen der ebenflächigen Furnierstücke sind blattförmig, muschelförmig oder camouflageförmig.

In einer Ausführungsform werden in Stufe (A) Furnierstücke einer Geometrie und Größe eingesetzt.

In einer Ausführungsform können runde oder rechteckige oder rautenförmige oder parallelogrammförmige Furnierstücke in Stufe (A) eingesetzt werden.

In einer weiteren Ausführungsform können auch zwei oder mehr dieser Formen in Stufe (A) eingesetzt werden.

In einer bevorzugten Ausführungsform können in Stufe (A) beispielsweise rautenförmige und rechteckige Furnierstücke eingesetzt werden.

Die Furnierstücke können in der gewünschten Form aus dem Messer- oder Schälfurnier herausgeschnitten werden.

Die Oberseite oder Unterseite eines Furnierstücks weist eine Oberfläche im Bereich von 200 bis 2000 mm² auf, vorzugsweise im Bereich von 200 bis 1200 mm², weiter bevorzugt im Bereich von 400 mm² bis 800 mm², wobei die Dicke des Furnierstücks im Bereich von unter 1 mm, vorzugsweise 0,5 mm bis 0,6 mm, liegt.

Der Begriff *"Dicke"* bedeutet hierbei den kleinsten Abstand zwischen einer Oberseite und einer Unterseite des Furnierstücks.

Die in Stufe (A) eingesetzten ebenflächigen Furnierstücke können aus einer Holzart oder aus verschiedenen Holzarten hergestellt werden. Dies bedeutet, dass die zur Herstellung verwendeten Schälfurniere und/oder Messerfurniere aus unterschiedlichen Baumarten gewonnen werden können.

Vorzugsweise wird ein helles Holz gewählt, da sich dieses für spätere Anwendungen so beizen lässt, dass der optische Eindruck und die dekorative Wirkung verstärkt werden. Vorzugsweise wird die helle Holzart ausgewählt aus Birkenholz oder Eschenholz oder Birkenholz und Eschenholz.

In Stufe (B) werden die Furnierstücke beleimt. Dies kann nach bekannten Verfahren mit üblichen, in der Holzindustrie verwendeten Bindemitteln oder Leimen erfolgen. Übliche Bindemittel und Leime sind beispielsweise Polyisocyanate oder Kondensationsprodukte von Formaldehyd mit Melaminen oder Phenolen.

Die Begriffe *"Leim"* und *"Bindemittel"* werden in dieser Offenbarung synonym verwendet und schließen auch den Begriff *"Kleber"* ein.

Vorzugsweise erfolgt das Beleimen in den üblichen Beleimungstrommeln.

Erfindungsgemäß werden in Stufe (C) die beleimten Furnierstücke so angeordnet, dass sie eine Schicht bilden, in der die beleimten Furnierstücke in einer regellosen Verteilung vorliegen.

Der Begriff *"Schicht"* wie hierin verwendet, bedeutet, dass die angeordneten Furnierstücke in flächenhafter Ausdehnung eine in einer gewissen Höhe über, unter oder zwischen anderem liegende einheitliche Masse bilden.

Der Begriff *"regellos"* wie hierin verwendet, bedeutet, dass die Furnierstücke in der Schicht ohne erkennbare Ordnung vorliegen.

Diese regellose Verteilung kann dadurch erreicht werden, dass die Furnierstücke in ein geeignetes Presswerkzeug eingestreut werden, solange, bis die gewünschte Schichtdicke erreicht ist. Das Einstreuen kann entweder maschinell oder per Hand erfolgen.

In Stufe (D) werden in einer Ausführungsform die in der Schicht angeordneten beleimten Furnierstücke in eine Platte mit einer Plattendicke kleiner als 6 mm verpresst. Geeignete Pressvorrichtungen sind im Stand der Technik bekannt.

Der Begriff *"Plattendicke"* wie hierin verwendet, bedeutet hierbei den kleinsten Abstand zwischen der Oberseite und der Unterseite der Platte.

Beim Verpressen werden die beleimten Furnierstücke miteinander verklebt.

Die hierzu erforderlichen Pressdrücke liegen vorzugsweise im Bereich von 10 bis 300 kg/cm², vorzugsweise 50 bis 200 kg/cm². Falls erforderlich kann auch ein höherer Druck verwendet werden, um in Stufe (D) die beleimten Furnierstücke in eine Platte mit einer Plattendicke kleiner als 6 mm zu verpressen.

Gegebenenfalls kann beim Verpressen auch erhöhte Temperatur angewendet werden, um den Verklebungsprozess zu beschleunigen. Geeignete Temperaturen liegen vorzugsweise im Bereich von 50 bis 150 °C.

Weiter erfolgt in einer Ausführungsform in Stufe (E) das Abschleifen der Platte, welche in Stufe (C) mit einer Dicke kleiner als 6 mm hergestellt worden ist, solange, bis das beim Abschleifen entstandene ebenflächige Furnier eine Dicke im Bereich von unter 1 mm, vorzugsweise 0,5 mm bis 0,6 mm, aufweist.

Das Abschleifen kann mit Schleifmaschinen und Verfahren durchgeführt werden, die im Stand der Technik bekannt sind.

In einer alternativen Ausführungsform kann auch so verpresst werden, dass die Plattendicke der entstehenden Platte eine Dicke aufweist, die über einer Dicke von 6 mm liegt.

In Abhängigkeit von der Anzahl der beleimten Furnierstücke ist auch die Herstellung eines Blocks möglich.

Der Begriff *"Block"* wie hierin verwendet, bedeutet ein massives und kompaktes Gebilde aus verpressten Furnierstücken.

In der alternativen Ausführungsform werden die in Stufe (D) erhaltene Platte oder der erhaltene Block parallel zu deren Oberseite oder Unterseite gemessert, d.h. es werden von dieser Platte oder dem Block Blätter unter Bildung eines abgemesserten Furniers abgeschnitten. Die Dicke des Furniers kann dabei frei gewählt werden, liegt aber vorzugsweise über der Dicke der herzustellenden dekorativen Oberfläche. Anschließend wird das abgemesserte Furnier solange abgeschliffen, bis das beim Abschleifen entstandene ebenflächige Furnier eine Dicke im Bereich von unter 1 mm, vorzugsweise 0,5 mm bis 0,6 mm, aufweist.

Vorzugsweise werden in beiden Ausführungsformen beim Abschleifen der Stufe (E) sowohl die Oberseite wie auch die Unterseite der Platte oder des abgemesserten Furniers abgeschliffen.

Die Oberfläche des entstandenen ebenflächigen Furniers aufweisend eine Dicke im Bereich von unter 1 mm, vorzugsweise 0,5 mm bis 0,6 mm, kann in einem weiteren Verfahrensschritt weiter bearbeitet werden.

Vorzugsweise kann die Oberfläche gebeizt werden. Vorzugsweise werden Beizen eingesetzt, welche die Maserung der dekorativen Holzoberfläche hervorheben. Damit kann insbesondere erreicht werden, dass die nach dem erfindungsgemäßen Verfahren hergestellte Oberfläche eine verstärkte Tiefenwirkung erhält.

Der Begriff *"Tiefenwirkung"* wie hierin verwendet, beschreibt die räumliche Wirkung der dekorativen Holzoberfläche.

Das Aufbringen der Beize kann nach den üblichen Verfahren erfolgen, vorzugsweise durch Aufsprühen oder Aufstreichen.

Demzufolge umfasst in einer Ausführungsform das Verfahren die Stufe (F):
(F) Beizen mindestens der Oberseite oder der Unterseite des in Stufe (E) erhaltenen ebenflächigen Furniers.

Die nach dem erfindungsgemäßen Verfahren hergestellte dekorative Holzoberfläche weist einen optischen Eindruck auf, der durch das Verfahren sehr gut reproduzierbar ist. Das Glanzbild des Endprodukts wird eingestellt durch das Legen und Vermischen der Furnierstücke gemäß Stufe (A), wobei ein Richtungswechsel der Holzfaserrichtungen erzeugt wird, sowie durch das Abschleifen der Platte gemäß Stufe (E). Werden beispielsweise Furnierstücke eines ersten Typs, beispielsweise rechteckige Furnierstücke, und eines zweiten Typs, beispielsweise rautenförmige Furnierstücke, gelegt und vermischt, stellt sich nach dem Zufallsprinzip ein Muster ein, wobei der Zufall auch für eine bestimmte Wiederholung sorgt.

Die dekorative Holzoberfläche weist insbesondere eine Perlmutt-artige Ästhetik auf.

Der Begriff "Perlmutt-artige Ästhetik" bedeutet, dass beim Bewegen der dekorativen Holzoberfläche oder je nach Blickwinkel die dekorative Oberfläche im Auge des Betrachters ein unterschiedliches Erscheinungsbild erzeugt. Dieses unterschiedliche Erscheinungsbild wird hervorgerufen durch die Vielzahl der miteinander verklebten und verschliffenen Furnierstücke.

Somit betrifft die Erfindung auch eine dekorative Holzoberfläche in Form eines ebenflächigen Furniers mit einer Dicke von unter 1 mm, vorzugsweise 0,5 bis 0,6 mm, mit einem aus gelegten und vermischten Furnierstücken und Abschleifen erzeugten Glanzbild, vorzugsweise wobei die Holzoberfläche eine Perlmutt-artige Ästhetik aufweist.

Vorzugsweise wird die nach dem erfindungsgemäßen Verfahren hergestellte dekorative Holzoberfläche in Form eines ebenflächigen Furniers im Innenausbau eines Automobils verwendet. Beispielsweise können das Armaturenbrett oder Ablagen mit der nach dem erfindungsgemäßen Verfahren hergestellten dekorativen Holzoberfläche in Form eines ebenflächigen Furniers ausgestaltet werden.

## Patentansprüche

1. Verfahren zur Herstellung einer dekorativen Holzoberfläche in Form eines ebenflächigen Furniers mit einer Dicke von unter 1 mm, vorzugsweise 0,5 bis 0,6 mm, aufweisend mindestens die Stufen (A) bis (E):
(A) Vermischen von geschnittenen ebenflächigen Furnierstücken, deren Oberseite oder Unterseite jeweils eine Oberfläche im Bereich von 200 mm² bis 2000 mm² aufweist, wobei die Furnierstücke jeweils eine Dicke im Bereich von unter 1 mm, vorzugsweise 0,5 mm bis 0,6 mm, aufweisen;
(B) Beleimen der vermischten Furnierstücke;
(C) Anordnen der beleimten Furnierstücke zu einer Schicht, die eine Dicke bis zu 15 mm aufweist;
(D) Verpressen der in der Schicht angeordneten beleimten Furnierstücke in eine Platte mit einer Plattendicke kleiner als 6 mm;
(E) Abschleifen der Platte solange, bis das beim Abschleifen entstandene ebenflächige Furnier eine Dicke im Bereich von unter 1 mm, vorzugsweise 0,5 mm bis 0,6 mm, aufweist;
wobei in Stufe (C) das Anordnen der beleimten Furnierstücke zu einer Schicht so erfolgt, dass die beleimten Furnierstücke in der Schicht in einer regellosen Verteilung vorliegen.

2. Verfahren zur Herstellung einer dekorativen Holzoberfläche in Form eines ebenflächigen Furniers mit einer Dicke von unter 1 mm, vorzugsweise 0,5 bis 0,6 mm, aufweisend mindestens die Stufen (A) bis (E):
(A) Vermischen von geschnittenen ebenflächigen Furnierstücken, deren Oberseite oder Unterseite jeweils eine Oberfläche im Bereich von 200 mm² bis 2000 mm² aufweist, wobei die Furnierstücke jeweils eine Dicke im Bereich von unter 1 mm, vorzugsweise 0,5 mm bis 0,6 mm, aufweisen;
(B) Beleimen der vermischten Furnierstücke;
(C) Anordnen der beleimten Furnierstücke zu einer Schicht;
(D) Verpressen der in der Schicht angeordneten beleimten Furnierstücke in eine Platte oder einen Block;
(E) Messern der Platte oder des Blocks parallel zu deren Oberseite oder Unterseite unter Bildung eines abgemesserten Furniers und nachfolgendes Abschleifen des abgemesserten Furniers solange, bis das beim Abschleifen entstandene ebenflächige Furnier eine Dicke im Bereich von unter 1 mm, vorzugsweise 0,5 mm bis 0,6 mm, aufweist.

3. Verfahren nach Anspruch 1 oder 2, wobei die in Stufe (A) eingesetzten ebenflächigen Furnierstücke aus einem Schälfurnier oder einem Messerfurnier oder aus einem Schälfurnier und einem Messerfurnier hergestellt werden.

4. Verfahren nach einem der Ansprüche 1 bis 3, wobei die in Stufe (A) eingesetzten ebenflächigen Furnierstücke aus einer Holzart oder aus verschiedenen Holzarten hergestellt werden.

5. Verfahren nach Anspruch 4, wobei die Holzart ausgewählt ist aus Birkenholz oder Eschenholz oder Birkenholz und Eschenholz.

6. Verfahren nach einem der Ansprüche 1 bis 5, wobei die in Stufe (A) eingesetzten Furnierstücke verschieden voneinander sind.

7. Verfahren nach einem der Ansprüche 1 bis 5, wobei die in Stufe (A) eingesetzten Furnierstücke gleichförmig zueinander sind.

8. Verfahren nach einem der Ansprüche 1 bis 7, wobei die in Stufe (A) eingesetzten ebenflächigen Furnierstücke runde, rechteckige, rautenförmige, parallelogrammförmige, blattförmige, muschelförmige oder camouflageförmige Furnierstücke einer Geometrie und Größe sind, oder wobei zwei oder mehr dieser Formen eingesetzt werden.

9. Verfahren nach einem der Ansprüche 1 bis 8, wobei die Oberfläche im Bereich von 200 mm² bis 1200 mm² liegt, vorzugsweise 400 mm² bis 800 mm².

10. Verfahren nach einem der Ansprüche 2 bis 9, wobei in Stufe (C) das Anordnen der beleimten Furnierstücke zu einer Schicht so erfolgt, dass die beleimten Furnierstücke in der Schicht in einer regellosen Verteilung vorliegen.

11. Verfahren nach einem der Ansprüche 1 bis 10, wobei in Stufe (E) sowohl die Oberseite wie auch die Unterseite der Platte oder des abgemesserten Furniers abgeschliffen werden.

12. Verfahren nach einem der Ansprüche 1 bis 11, weiter umfassend die Stufe (F):
(F) Beizen mindestens der Oberseite oder der Unterseite des in Stufe (E) erhaltenen ebenflächigen Furniers.

13. Dekorative Holzoberfläche in Form eines ebenflächigen Furniers mit einer Dicke von unter 1 mm, vorzugsweise 0,5 bis 0,6 mm, mit einem aus gelegten und vermischten Furnierstücken und Abschleifen erzeugten Glanzbild, wobei die Furnierstücke beleimt und so angeordnet sind, dass sie eine Schicht bilden, in der die beleimten Furnierstücke in einer regellosen Verteilung vorliegen.

14. Dekorative Oberfläche nach Anspruch 13, wobei die Holzoberfläche eine Perlmutt-artige Ästhetik aufweist, wobei der Begriff "Perlmutt-artige Ästhetik" bedeutet, dass beim Bewegen der dekorativen Holzoberfläche oder je nach Blickwinkel die dekorative Oberfläche im Auge des Betrachters ein unterschiedliches Erscheinungsbild erzeugt.

15. Verwendung einer dekorativen Holzoberfläche in Form eines ebenflächigen Furniers hergestellt nach einem der Ansprüche 1 bis 12, oder Verwendung einer dekorativen Holzoberfläche in Form eines ebenflächigen Furniers nach einem der Ansprüche 13 oder 14, im Innenausbau eines Automobils.

## Claims

1. Method for the production of a decorative wood surface in the form of a planar veneer with a thickness of less than 1 mm, preferably 0.5 to 0.6 mm, comprising at least steps (A) to (E):
(A) Mixing of cut planar veneer pieces, the top or bottom side of which each comprise a surface area in the range of 200 mm² to 2000 mm², the veneer pieces each having a thickness in the range of less than 1 mm, preferably 0.5 mm to 0.6 mm;
(B) gluing the mixed veneer pieces;
(C) arranging the glued veneer pieces into a layer having a thickness of up to 15 mm;
(D) pressing the glued veneer pieces arranged in the layer into a board having a board thickness of less than 6 mm;
(E) sanding the board until the planar veneer, produced during sanding, has a thickness in the range of less than 1 mm, preferably 0.5 mm to 0.6 mm;
wherein in step (C) the arrangement of the glued veneer pieces to form a layer is effected in such a way that the glued veneer pieces are present in the layer in a random distribution.

2. Method for the production of a decorative wood surface in the form of a planar veneer with a thickness of less than 1 mm, preferably 0.5 to 0.6 mm, comprising at least steps (A) to (E):
(A) Mixing of cut flat veneer pieces, the top or bottom side of which each comprise a surface area in the range of 200 mm² to 2000 mm², the veneer pieces each having a thickness in the range of less than 1 mm, preferably 0.5 mm to 0.6 mm;
(B) gluing the mixed veneer pieces;
(C) arranging the glued veneer pieces into a layer;
(D) pressing the glued veneer pieces arranged in the layer into a board or a block;
(E) slicing the board or block parallel to its top or bottom side to form a sliced veneer and subsequently sanding the sliced veneer until the planar veneer produced by sanding has a thickness in the range of less than 1 mm, preferably 0.5 mm to 0.6 mm.

3. Method according to claim 1 or 2, wherein the planar veneer pieces used in step (A) are produced from a rotary cut veneer or a sliced veneer or from a rotary cut veneer and a sliced veneer.

4. Method according to any one of claims 1 to 3, wherein the planar veneer pieces used in step (A) are made from one type of wood or from different types of wood.

5. Method according to claim 4, wherein the wood species is selected from birch wood or ash wood or birch wood and ash wood.

6. Method according to any one of claims 1 to 5, wherein the veneer pieces used in step (A) are different from one another.

7. Method according to any one of claims 1 to 5, wherein the veneer pieces used in step (A) are uniform to one another.

8. Method according to any one of claims 1 to 7, wherein the planar veneer pieces used in step (A) are round, rectangular, diamond-shaped, parallelogram-shaped, leaf-shaped, shell-shaped or camouflaged veneer pieces of one geometry and size, or wherein two or more of these shapes are used.

9. Method according to any of claims 1 to 8, wherein the surface area is in the range of 200 mm² to 1200 mm², preferably 400 mm² to 800 mm².

10. Method according to any one of claims 2 to 9, wherein in step (C) the arrangement of the glued veneer pieces to form a layer is carried out in such a way that the glued veneer pieces are present in the layer in a random distribution.

11. Method according to any one of claims 1 to 10, wherein in step (E) both the top and bottom of the panel or sliced veneer are sanded.

12. Method according to any one of claims 1 to 11, further comprising step (F):
(F) Etching at least the top or bottom of the planar veneer obtained in step (E).

13. Decorative wood surface in the form of a planar veneer with a thickness of less than 1 mm, preferably 0.5 to 0.6 mm, with a glossy finish produced from laid and mixed veneer pieces and sanding, wherein the veneer pieces are glued and arranged so that they form a layer in which the glued veneer pieces are present in a random distribution.

14. Decorative surface according to claim 13, wherein the wood surface has a mother-of-pearl-like aesthetic, wherein the term "mother-of-pearl-like aesthetic" means that when moving the decorative wood surface, or, depending on the viewing angle, the decorative surface produces a different appearance in the eye of the viewer.

15. Use of a decorative wood surface in the form of a planar veneer produced according to one of claims 1 to 12, or use of a decorative wood surface in the form of a planar veneer, produced according to one of claims 13 or 14, in the interior construction of an automobile.

## Revendications

1. Procédé de fabrication d'une surface en bois décorative se présentant sous forme d'une feuille de placage à surface plane avec une épaisseur de moins d'1 mm, de préférence de 0,5 à 0,6 mm, présentant au moins les étapes (A) à (E) :
(A) le mélange de morceaux de feuille de placage à surface plane découpés, dont la face supérieure ou la face inférieure présente chacune une superficie dans la plage de 200 mm² à 2000 mm², dans lequel les morceaux de feuille de placage présentent chacun une épaisseur dans la plage de moins de 1 mm, de préférence de 0,5 mm à 0,6 mm ;
(B) l'encollage des morceaux de feuille de placage mélangés ;
(C) la disposition des morceaux de feuille de placage encollés en une couche qui présente une épaisseur allant jusqu'à 15 mm ;
(D) le compactage des morceaux de feuille de placage encollés disposés dans la couche en une plaque avec une épaisseur de plaque inférieure à 6 mm ;
(E) le ponçage de la plaque jusqu'à ce que la feuille de placage à surface plane obtenue lors du ponçage présente une épaisseur dans la plage de moins de 1 mm, de préférence de 0,5 mm à 0,6 mm ;
dans lequel, à l'étape (C), la disposition des morceaux de feuille de placage encollés en une couche s'effectue de sorte que les morceaux de feuille de placage encollés sont présents dans la couche dans une répartition aléatoire.

2. Procédé de fabrication d'une surface en bois décorative se présentant sous forme d'une feuille de placage à surface plane avec une épaisseur de moins d'1 mm, de préférence de 0,5 à 0,6 mm, présentant au moins les étapes (A) à (E) :
(A) le mélange de morceaux de feuille de placage découpés à surface plane, dont la face supérieure ou la face inférieure présente chacune une superficie dans la plage de 200 mm² à 2000 mm², dans lequel les morceaux de feuille de placage présentent chacun une épaisseur dans la plage de moins de 1 mm, de préférence de 0,5 mm à 0,6 mm ;
(B) l'encollage des morceaux de feuille de placage mélangés ;
(C) la disposition des morceaux de feuille de placage encollés en une couche ;
(D) le compactage des morceaux de feuille de placage encollés disposés dans la couche en une plaque ou un bloc ;
(E) le tranchage de la plaque ou du bloc parallèlement à la face supérieure ou la face inférieure de ceux-ci avec formation d'une feuille de placage tranchée et le ponçage subséquent de la feuille de placage tranchée jusqu'à ce que la feuille de placage à surface plane obtenue lors du ponçage présente une épaisseur dans la plage de moins de 1 mm, de préférence de 0,5 mm à 0,6 mm.

3. Procédé selon la revendication 1 ou 2, dans lequel les morceaux de feuille de placage à surface plane utilisés à l'étape (A) sont fabriqués à partir d'une feuille de placage déroulée ou d'une feuille de placage tranchée ou à partir d'une feuille de placage déroulée et d'une feuille de placage tranchée.

4. Procédé selon l'une quelconque des revendications 1 à 3, dans lequel les morceaux de feuille de placage à surface plane utilisés à l'étape (A) sont fabriqués à partir d'une sorte de bois ou de différentes sortes de bois.

5. Procédé selon la revendication 4, dans lequel la sorte de bois est choisie parmi le bois de bouleau ou le bois de frêne ou le bois de bouleau et le bois de frêne.

6. Procédé selon l'une quelconque des revendications 1 à 5, dans lequel les morceaux de feuille de placage utilisés à l'étape (A) sont différents les uns des autres.

7. Procédé selon l'une quelconque des revendications 1 à 5, dans lequel les morceaux de feuille de placage utilisés à l'étape (A) sont uniformes les uns par rapport aux autres.

8. Procédé selon l'une quelconque des revendications 1 à 7, dans lequel les morceaux de feuille de placage à surface plane utilisés à l'étape (A) sont des morceaux de feuille de placage ronds, rectangulaires, en forme de losange, en forme de parallélogramme, en forme de feuille, en forme de coquillage ou en forme de camouflage, de géométrie et dimension, ou dans lequel deux ou plus de ces formes sont utilisées.

9. Procédé selon l'une quelconque des revendications 1 à 8, dans lequel la superficie se situe dans la plage de 200 mm² à 1200 mm², de préférence de 400 mm² à 800 mm².

10. Procédé selon l'une quelconque des revendications 2 à 9, dans lequel, à l'étape (C), la disposition des morceaux de feuille de placage encollés en une couche s'effectue de sorte que les morceaux de feuille de placage encollés sont présents dans la couche dans une répartition aléatoire.

11. Procédé selon l'une quelconque des revendications 1 à 10, dans lequel aussi bien la face supérieure que la face inférieure de la plaque ou de la feuille de placage tranchée sont poncées à l'étape (E).

12. Procédé selon l'une quelconque des revendications 1 à 11, comprenant en outre l'étape (F) :
(F) le chauffage d'au moins la face supérieure ou la face inférieure de la feuille de placage à surface plane obtenue à l'étape (E).

13. Surface en bois décorative se présentant sous forme d'une feuille de placage à surface plane avec une épaisseur de moins d'1 mm, de préférence de 0,5 à 0,6 mm, avec une image brillante produite à partir de morceaux de feuille de placage placés et mélangés et du ponçage, dans laquelle les morceaux de feuille de placage sont encollés et disposés de sorte qu'ils forment une couche dans laquelle les morceaux de feuille de placage encollés sont présents dans une répartition aléatoire.

14. Surface décorative selon la revendication 13, dans laquelle la surface en bois présente une esthétique du type nacre, dans laquelle le terme « esthétique du type nacre » signifie que, lors du déplacement de la surface en bois décorative ou selon l'angle de vision, la surface décorative produit une apparence différente dans l'œil de l'observateur.

15. Utilisation d'une surface en bois décorative se présentant sous forme d'une feuille de placage à surface plane fabriquée selon l'une quelconque des revendications 1 à 12, ou utilisation d'une surface en bois décorative se présentant sous forme d'une feuille de placage à surface plane selon l'une quelconque des revendications 13 ou 14, dans l'aménagement intérieur d'une automobile.
